# FASCICULE DE BREVET EUROPEEN

(11) **EP 0 537 075 B1**
(45) Date de publication et mention de la délivrance du brevet: **26.04.1995**
(21) Numéro de dépôt: 92402753.5
(22) Date de dépôt: 08.10.1992
(51) Int. Cl.: B65G 67/02, B60P 3/077

(54) **Installation pour immobiliser un véhicule de transport dans une position de transbordement prédéterminée**
Anlage zum Immobilisieren eines Transportfahrzeuges in einer vorherbestimmten Überfahrlage
Plant for immobilizing a transport vehicle in a predetermined loading position

(30) Priorité: 09.10.1991 FR 9112448
(43) Date de publication de la demande: 14.04.1993
(73) Titulaire: Roux, Michel, F-26270 Loriol-sur-Drome (FR)
(72) Inventeur: Roux, Michel, F-26270 Loriol-sur-Drome (FR)
(74) Mandataire: Bruder, Michel

(56) Documents cités:
- EP-A- 0 384 850
- FR-A- 2 652 340
- US-A- 2 858 905
- US-A- 4 207 019

## Description

La présente invention concerne une installation pour immobiliser, d'une manière sûre, un véhicule de transport de marchandises dans une position de transbordement prédéterminée notamment par rapport à un quai industriel.

On connaît déjà différents dispositifs de calage des roues arrière d'un camion, ces dispositifs visant à immobiliser le camion à une distance prédéterminée d'un quai industriel destiné au transbordement de marchandises. Un dispositif connu de ce genre utilise une cale posée sur le sol et pourvue d'un palpeur détectant la présence d'une roue d'un véhicule à son contact, ce palpeur commandant une barrière de sécurité pour permettre son ouverture, lorsque le camion se trouve placé dans la position correcte. Un tel dispositif présente l'inconvénient d'exiger une intervention physique et il n'assure pas toute la sécurité désirable. D'autres dispositifs connus utilisent des cales mobiles verticalement, escamotables dans le sol, et ils exigent des travaux de génie civil importants pour leur mise en place.

On connaît également, par le brevet FR-A-2.652.340, un dispositif destiné à assurer le positionnement d'une cale pliante devant une roue d'un véhicule positionné devant un quai de chargement. Ce dispositif est constitué d'un lien flexible, formant une boucle fermée, qui s'étend entre une poulie de renvoi et des moyens d'entraînement, et une cale pliante, fixée au lien, que l'on déplace à l'aide des moyens d'entraînement de façon à l'amener en butée contre une roue du véhicule, le dépliement de la cale étant provoqué par l'application de celle-ci contre ladite roue. Un tel dispositif présente un premier inconvénient provenant de ce que, la cale se déplaçant en contact direct avec le sol, il est nécessaire que ce dernier soit exempt de déformations importantes, sous peine de perturber gravement le fonctionnement du système. Un second inconvénient provient de ce que le déplacement répété de la cale sur le sol, toujours au même endroit de celui-ci, crée une zone d'usure qui, à la longue, perturbe son fonctionnement correct.

La présente invention vise à remédier à ces divers inconvénients en proposant un dispositif particulièrement simple, aisément mis en place, assurant d'une manière automatique une immobilisation des roues d'un véhicule industriel, tel qu'un camion, sans efforts du chauffeur du véhicule et sans exiger de travaux de préparation importants de la zone où il doit être installé.

La présente invention a ainsi pour objet une installation destinée à assurer l'immobilisation d'un véhicule, dans une position de transbordement déterminée, notamment par rapport à un quai industriel, comportant au moins un élément de calage mobile pour immobiliser au moins une roue du véhicule, caractérisée en ce qu'elle comprend :
- au moins un support en appui sur le sol et ancré dans celui-ci,
- au moins un élément de calage, mobile dans un plan sensiblement horizontal par rapport au support, entre au moins deux positions, à savoir une première position, ou position de repos, et une seconde position, ou position active, dans laquelle l'élément de calage assure le blocage de ladite roue,
- des moyens d'entraînement pour assurer le déplacement dudit élément de calage par rapport au support, entre sa position de repos et sa position active et vice versa et,
- des moyens de liaison, aptes à rendre ledit élément de calage solidaire du support lorsqu'il se trouve en position active.

Dans un mode de mise en oeuvre de l'invention l'installation comporte une pluralité de supports, constitués, chacun, d'un plot ancré dans le sol, ces plots étant disposés à distance donnée les uns des autres, suivant une ligne sensiblement perpendiculaire au quai de chargement.

Dans un autre mode de mise en oeuvre de l'invention le support est constitué de deux éléments longitudinaux parallèles et distants l'un de l'autre suffisamment pour permettre aux roues du véhicule de passer entre eux, ces éléments longitudinaux assurant le guidage d'au moins un chariot, l'élément de calage s'étendant transversalement entre lesdits éléments longitudinaux, et chacune de ses extrémités prenant respectivement appui sur ledit chariot.

Dans une variante de ce mode de mise en oeuvre de l'invention, l'élément de calage s'étend transversalement sur au moins un chariot mobile par rapport au support et est réalisé sous la forme d'un dièdre déformable convergeant vers le haut, formé d'un panneau antérieur, ou panneau le plus éloigné de la roue à bloquer, et d'un panneau postérieur, ou panneau le plus rapproché de ladite roue, constituant les deux côtes du dièdre, ces deux panneaux étant articulés entre eux autour d'un axe transversal intermédiaire, constituant l'arète supérieure du dièdre déformable, le panneau antérieur étant articulé, le long de son bord antérieur et inférieur, sur un axe transversal antérieur, qui est entraîne par les moyens d'entraînement, le panneau postérieur étant articulé, le long de son bord postérieur et inférieur, sur un axe transversal postérieur, cet axe postérieur étant monté en position fixe sur ledit chariot alors que l'axe antérieur qui est entraîne, est monté de manière à pouvoir se déplacer longitudinalement sur ledit chariot, afin de commander la déformation de l'élément de calage.

Dans un mode de mise en oeuvre intéressant de l'invention, le chariot est formé d'un plateau monté mobile dans les supports et est maintenu à une faible distance du sol par des moyens de suspension élastiques, au moins lorsque l'élément de calage (4) se déplace de sa position de repos à sa position active.

On décrira ci-après, à titre d'exemples non limitatifs, diverses formes d'exécution de la présente invention, en référence au dessin annexé sur lequel :
La figure 1 est une vue en coupe verticale et longitudinale schématique d'une installation d'immobilisation, par rapport à un quai industriel, d'un véhicule de transport de marchandises suivant l'invention, l'élément de calage déformable étant représenté en position antérieure de repos ou inactive.
La figure 2 est une vue en coupe verticale et longitudinale semblable à celle de la figure 1, l'élément de calage de l'installation étant représenté en position postérieure de calage, après qu'un véhicule ait été reculé jusqu'à une position prédéterminée pour un transbordement de marchandises à partir d'un quai industriel ou vers ce quai.
La figure 3 est une vue en plan, avec arrachement partiel, à plus grande échelle, d'un dispositif de calage avant suivant l'invention, l'élément de calage déformable étant représenté en position de repos ou inactive.
La figure 4 est une vue en coupe verticale et transversale faite suivant la ligne IV-IV de la figure 3.
Les figures 5,6 et 7 sont des vues schématiques en élévation, illustrant le déplacement et la déformation de l'élément de calage lorsqu'il passe de sa position de repos ou inactive à sa position active.
La figure 8 est une vue de dessus partielle d'un mode de mise en oeuvre de l'installation suivant l'invention.
Les figures 9a et 9b sont des vues partielles en coupe suivant la ligne IX-IX de la figure 8, respectivement lorsque l'élément de calage est en position de repos et en position active.
La figure 9c est une vue partielle en coupe transversale suivant la ligne IXc-IXc de la figure 8.
Les figures 10,11 et 12 sont des vues en coupe horizontale, à plus grande échelle, d'un dispositif de crabotage utilisé pour rendre l'élément de calage déformable solidaire de an support, lorsqu'il se trouve en position active ou de calage.
Les figures 13 à 18 sont des vues schématiques en élévation et de profil d'un dispositif de bridage d'une roue associée à l'élément de calage déformable avant, dans plusieurs positions opérationnelles différentes.
Les figures 19 à 22 sont des vues schématiques en élévation et de profil d'un dispositif de bridage d'une roue associé à un élément de calage arrière.
Les figures 23 à 28 sont des vues en plan schématiques d'un dispositif de sécurité contrôlant le recul d'un véhicule jusqu'à une distance prédéterminée d'un quai industriel, dans plusieurs positions opérationnelles différentes.
La figure 29 est une vue en plan schématique d'une variante du dispositif représenté sur les figures 23 à 28.

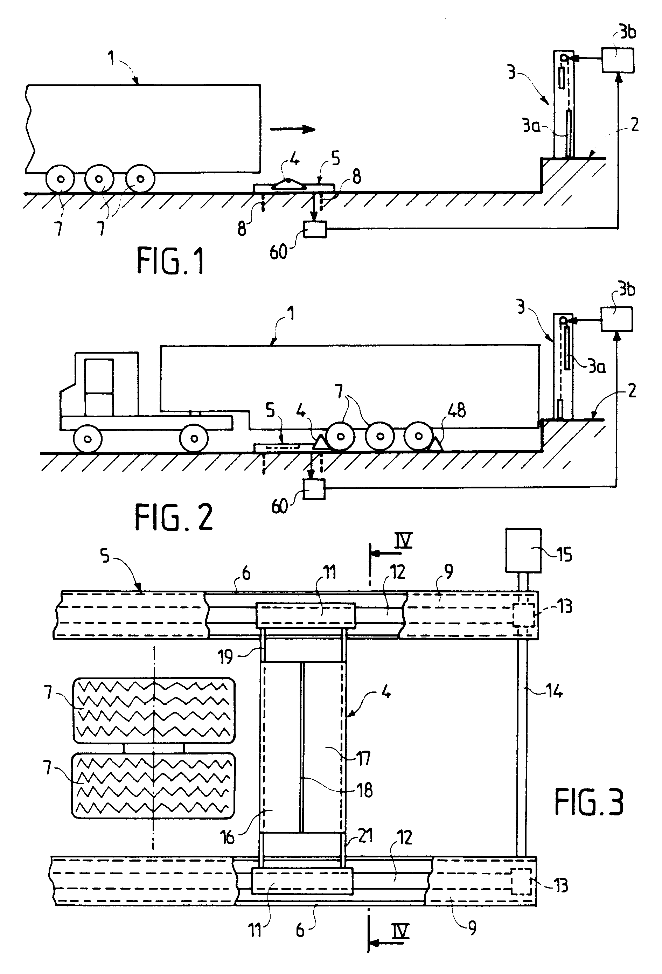

L'installation de sécurité qui est représentée schématiquement dans son ensemble sur les figures 1 et 2, est destinée à immobiliser un véhicule industriel 1, tel qu'un camion, un camion à remorque ou semi-remorque, en vue du chargement, à l'intérieur de ce camion, (ou du déchargement) de marchandises à partir d'un quai industriel 2 (ou sur ce quai). Ce quai peut être avantageusement pourvu d'un dispositif de sécurité 3 à barrière mobile 3a dont la barrière est placée, le long du bord du quai, lorsqu'aucun véhicule 1 ne se trouve en position de transbordement des marchandises (figure 1) alors que cette barrière est escamotée, par un mouvement vertical ou horizontal, lorsqu'un véhicule est en position de transbordement (figure 2).

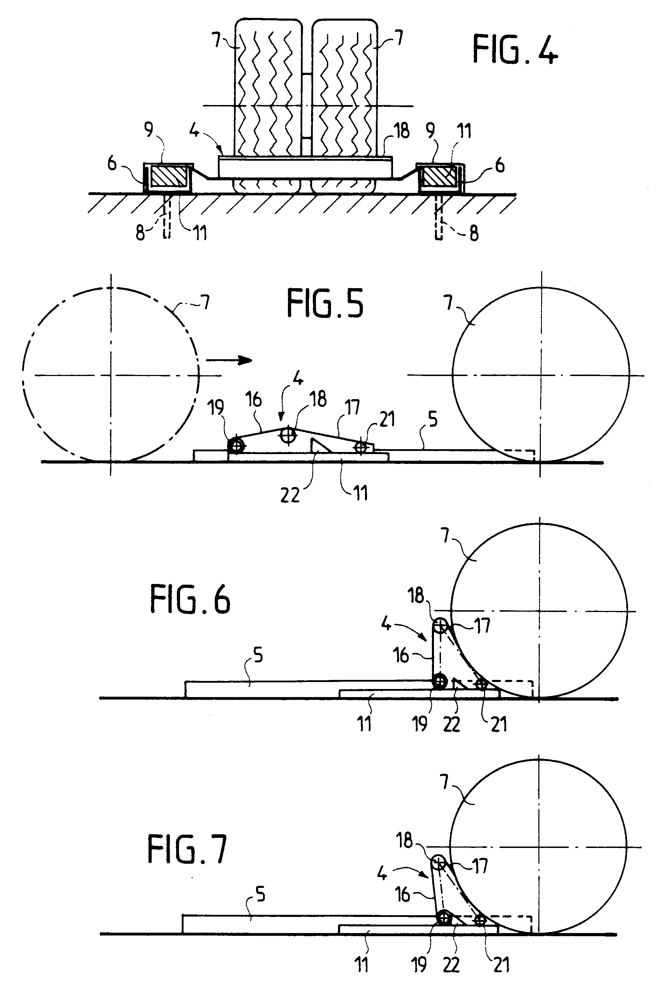

L'installation suivant l'invention comprend, dans le présent mode de mise en oeuvre de l'invention, pour chaque ensemble de roues situées d'un même côté du véhicule 1, un dispositif de calage avant destiné à empêcher le véhicule d'avancer et de s'éloigner du quai 2, une fois la position de transbordement désirée atteinte. Ce dispositif comporte un élément de calage avant 4 qui est monté mobile longitudinalement, c'est-à-dire perpendiculairement au quai 2, et parallèlement au sol, sur un support 5 en appui sur la surface supérieure du sol et ancré dans celui-ci. Le support 5 de chaque élément de calage avant mobile 4 est avantageusement constitué de deux profilés 6, par exemple à section transversale en U, parallèles l'un à l'autre (figures 3 et 4), s'étendant dans le sens longitudinal et suffisamment distants l'un de l'autre pour permettre à des roues 7, simples ou jumelées, du véhicule 1 de passer entre eux. Chaque profilé en U 6 est fixé au sol par des dispositifs d'ancrage 8 de tout type connu. Ces profilés 6 sont coiffés, à leurs parties supérieures, de plaques 9 formant couvercles et cachant l'intérieur des profilés 6. Le support 5, en plus de son ancrage au sol, peut comporter des moyens de fixation, permettant d'assurer sa solidarisation au quai industriel 2.

L'élément de calage avant 4 qui s'étend transversalement entre les deux profilés en U 6, est porté, à chacune de ses extrémités, par un chariot 11, mobile longitudinalement, dans les deux sens, à l'intérieur d'un profilé en U 6. L'entraînement de chaque chariot 11 peut être réalisé par tous moyens appropriés et, notamment, au moyen d'une courroie crantée sans fin 12 s'étendant longitudinalement à l'intérieur du profilé en U 6 et passant, à ses deux extrémités, sur des poulies crantées montées en rotation autour d'axes transversaux portés par le profilé 6. Sur la figure 3 on voit que chaque courroie crantée 12 s'enroule, à son extrémité arrière, c'est-à-dire celle qui est située du côté du quai 2, autour d'une poulie crantée d'entraînement 13, une poulie crantée de renvoi similaire, non représentée, étant prévue à l'autre extrémité de la courroie crantée sans fin 12. Les deux poulies crantées d'entraînement 13 sont solidaires d'un même arbre transversal 14 auquel est accouplé un moteur 15. La rotation de ce moteur 15, dans un sens ou dans l'autre, permet ainsi de déplacer l'élément de calage avant mobile 4 vers l'avant ou vers l'arrière.

L'élément de calage avant mobile 4 est réalisé de préférence de manière à être déformable et à présenter, en position antérieure de repos, ainsi qu'il est illustré sur les figures 1 à 4, une forme relativement aplatie permettant son franchissement aisé par les roues 7 du véhicule 1 lorsque celui-ci recule. A cet effet l'élément de calage avant 4 est avantageusement réalisé sous la forme d'un dièdre convergeant vers le haut si bien que, vu dans le sens horizontal et transversal, l'élément de calage 4 présente, en position de repos, la forme d'un triangle assez aplati. Plus particulièrement l'élément de calage 4 comprend des panneaux avant 16 et arrière 17, constituant les deux côtés du dièdre, ces deux panneaux étant articulés entre eux autour d'un axe transversal intermédiaire 18 constituant l'arète supérieure du dièdre déformable. Les deux panneaux 16,17 de l'élément de calage avant 4 peuvent être plans, comme il est représenté sur le dessin, ou bien encore le panneau arrière 17 peut aussi avoir la forme d'un dièdre d'angle obtus ouvert vers le haut et vers l'arrière. Le panneau avant 16 est articulé, le long de son bord antérieur et inférieur, autour d'un axe antérieur 19 s'étendant entre les parties antérieures des deux chariots 11 et qui est entraîne par les deux courroies crantées 12. De la même façon, le panneau arrière 17 est articulé, le long de son bord postérieur et inférieur, sur un axe transversal postérieur 21 s'étendant entre les deux chariots 11. L'axe postérieur 21 est monté en position fixe sur les deux chariots 11 alors que l'axe antérieur 19 qui est entraîne par les courroies 12 et qui transmet son mouvement à l'ensemble de l'élément de calage avant 4, est monté de manière à pouvoir se déplacer longitudinalement, sur les deux chariots 11, afin de commander la déformation de l'élément de calage avant 4.

On décrira maintenant, en se reportant plus particulièrement aux figures 5 à 7, la façon dont les roues arrières 7 d'un véhicule 1 sont immobilisées par l'élément de calage avant 4, une fois que ce véhicule 1 a reculé jusqu'à la position appropriée pour le transbordement des marchandises, au niveau du quai 2.

Sur la figure 5 l'élément de calage avant 4 est représenté en position de repos, à l'extrémité antérieure de sa course sur son support 5, Dans ce cas le dièdre qu'il forme est très aplati, ce qui permet son franchissement par les roues 7 du véhicule 1 reculant vers le quai 2. Sur la figure 5 la roue 7 est représentée en trait mixte avant le franchissement de l'élément de calage avant 4 et en trait plein après le franchissement de celui-ci. Une fois que le véhicule a reculé jusqu'à la position appropriée pour le transbordement des marchandises, la roue 7 se trouvant alors dans la position représentée en trait plein, on commande, par un système de tout type connu, la mise en marche du moteur 15 pour déplacer l'ensemble de l'élément de calage avant 4 vers l'arrière. A cet effet le moteur 15 entraîne les deux chariots 11 vers l'arrière, par l'intermédiaire de l'arbre 14, des poulies crantées 13 et des courroies crantées 12, et ce déplacement s'effectue tout d'abord sans déformation de l'élément de calage 4. Lorsque le bord inférieur et postérieur du panneau postérieur 17 de l'élément de calage 4, où se trouve l'axe d'articulation postérieur 21, vient rencontrer la roue 7, les chariots 11 sont alors immobilisés, mais, du fait que l'axe antérieur 19 qui est entraîne par les courroies crantées 12, est monté mobile longitudinalement par rapport aux chariots 11, cet axe 19 continue à se déplacer seul vers l'arrière, par rapport aux chariots 11 qui sont, eux, à l'arrêt. Ce mouvement de l'axe antérieur 19 vers l'arrière, alors que l'axe postérieur 21 est immobilisé, provoque une déformation du dièdre que constitue l'élément de calage 4, l'axe intermédiaire 18 étant alors soulevé et les panneaux 16 et 17 étant de plus en plus inclinés vers le haut. A un certain moment, ainsi qu'il est représenté sur la figure 6, l'axe antérieur 19 se trouve placé à la verticale juste en dessous de l'axe intermédiaire 18, si bien que l'élément de calage avant 4 a alors la forme d'un triangle rectangle, le panneau antérieur 16 étant vertical et le panneau postérieur 17 étant, lui, incliné de haut en bas et d'avant en arrière, en étant en contact avec la roue 7. A partir de cette position l'axe antérieur 19 peut poursuivre légèrement son mouvement vers l'arrière jusqu'à ce qu'il vienne rencontrer une butée 22 prévue sur chaque chariot 11. A ce moment le panneau antérieur 16 se trouve incliné de haut en bas et d'avant en arrière, l'élément de calage avant 4 est dressé en position active et le mécanisme à genouillère que forment les deux panneaux 16 et 17 est bloqué en position d'immobilisation de la roue 7, à l'encontre de tout mouvement de celle-ci vers l'avant. Naturellement les opérations précédentes se déroulent en sens inverse, lorsque les roues 7 doivent être libérées pour permettre le départ du véhicule, les chariots 11 se déplaçant alors vers l'avant et provoquant l'aplatissement progressif de l'élément de calage 4 jusqu'à ce qu'il reprenne sa position inactive représentée sur la figure 5, en permettant ainsi son franchissement vers l'avant.

Suivant une caractéristique complémentaire de l'invention le dispositif de sécurité 3 (figures 1 et 2) à barrière mobile 3a peut être asservi au dispositif de calage avant de manière à ne permettre l'ouverture de la barrière 3a que lorsque le véhicule 1 est immobilisé dans la position appropriée pour le transbordement. Cet asservissement peut être réalisé, ainsi qu'il est représenté sur les figures 1 et 2, par un dispositif 60 détectant l'élément de calage avant 4 en position postérieure active ou de calage et agissant alors sur un appareil de commande 3b du dispositif de sécurité 3, pour autoriser l'ouverture de la barrière mobile 3a.

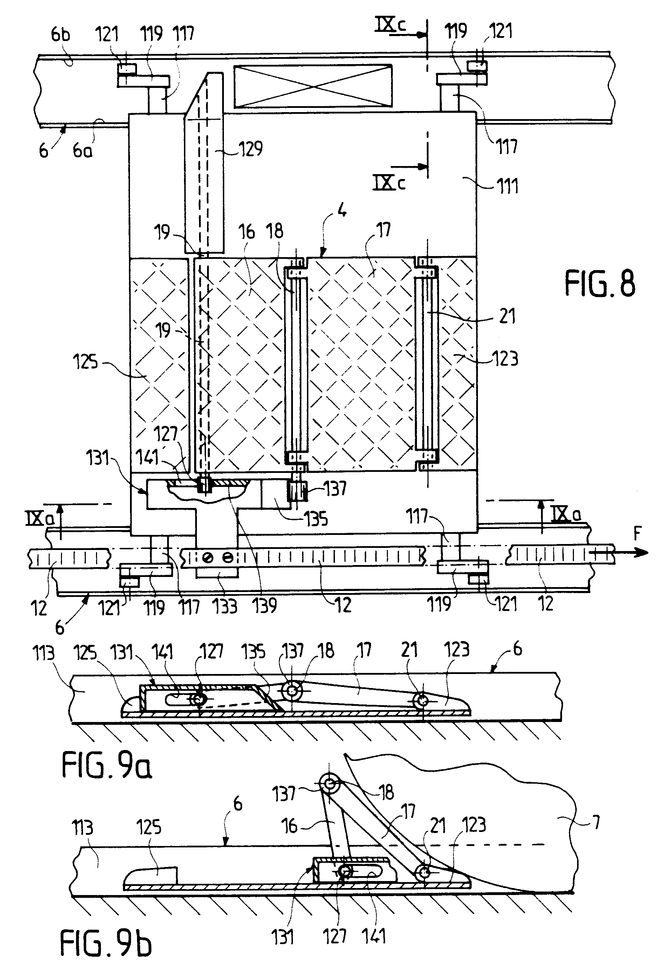

Dans un mode de mise en oeuvre particulièrement intéressant de l'invention, représenté sur les figures 8, 9a et 9b, l'élément de calage 4 est disposé sur un plateau 111 de forme rectangulaire s'étendant entre les profilés longitudinaux 6 qui constituent le support 5.

Les bords longitudinaux du plateau 111 sont repliés en forme de U inversé venant coiffer l'aile interne 6a du profilé 6. Chacune des parois longitudinales externes 115 du plateau 111 comporte, à ses extrémités antérieure et postérieure, un support 117 sur lequel est articulé un bras pivotant 119 pour'vu d'un galet de roulement 121, qui vient en appui sur la base du profilé 6. Des moyens de torsion, logés dans le support 117 et non représentés sur le dessin, créent un couple antagoniste au poids du plateau 111 et des éléments disposés sur celui-ci, de façon à assurer le maintien du plateau 111 à une faible distance d du sol. Le plateau 111 peut ainsi se déplacer longitudinalement en étant guidé dans les profilés 6, en appui sur ses quatre galets de roulement 121.

Dans ce mode de mise en oeuvre, l'élément de calage 4 ne s'étend que sur une partie de la dimension transversale séparant les deux profilés 6. Cet élément de calage 4 est constitué, comme dans la réalisation décrite précédemment, de deux panneaux articulés entre eux autour d'un axe intermédiaire 18, à savoir un panneau antérieur 16 et un panneau postérieur 17 qui forment un dièdre. En outre un élément de contact transversal 123 est fixé sur la partie arrière du plateau 111. Cet élément de contact 123 supporte l'axe postérieur 21, sur lequel est articulée la partie arrière du panneau postérieur 17. Un sabot 125 légèrement incliné vers l'avant est fixé sur la partie antérieure du plateau 111.

La partie avant du panneau 16 comporte un axe antérieur 19 qui dépasse, sur l'un des côtés, de façon à former un téton 127, et qui se prolonge, de l'autre côté pour supporter, à rotation, une aile transversale 129 disposée dans le plan du plateau 111.

Un coulisseau 131 est monté mobile dans le sens longitudinal sur le plateau 111, sur des moyens de guidage, non représentés sur le dessin. Ce coulisseau 131 comporte une patte transversale 133 par laquelle il est fixé sur le brin supérieur d'une courroie crantée 12 constituant, comme vu précédemment, les moyens d'actionnement du dispositif. Le coulisseau 131 comporte une partie postérieure 135 inclinée du haut vers le bas et d'avant en arrière, c'est-à-dire de gauche à droite sur la figure 8. Face à cette partie inclinée 135 l'extrémité de l'axe intermédiaire 18 est pourvue d'un galet 137. La paroi verticale 139 du coulisseau 131, disposée du côté de l'extrémité de l'axe formant le téton 127, est creusée d'une lumière longitudinale 141 à l'intérieur de laquelle pénètre ledit téton 127. Cette lumière longitudinale 141 s'étend en arrière du téton 127, lorsque l'élément de calage 4 est en position aplatie, ou position de repos, ainsi que représenté sur la figure 9a, de façon que, lorsque le coulisseau 131 se déplace, vers la roue 7 du véhicule 1, c'est à dire vers la droite sur la figure 9a, la partie inclinée 135 du coulisseau 131 vienne en contact avec le galet 137 et le déplace vers le haut avant que la partie arrière de la lumière 141 ne vienne en contact avec le téton 127 et assure l'entraînement de celui-ci.

Dans ces conditions, le fonctionnement du présent mode de mise en oeuvre de l'invention s'effectue comme décrit ci-après.

Sur les figures 8 et 9a l'élément de calage 4 est représenté en position de repos. Ainsi que dans le mode de mise oeuvre précédemment décrit, le dièdre formé par les panneaux antérieur 16 et postérieur 17 est donc très aplati, si bien que l'élément de calage 4 peut être aisément franchi par les roues 7 du véhicule 1 lorsque ce dernier recule en direction du quai 2. Lorsque la roue 7 du véhicule 1, lors de ce franchissement, appuie sur le plateau 111, les quatre bras de suspension 119 pivotent et le plateau 111 est plaqué à plat contre le sol, de sorte que le poids du véhicule 1 ne peut provoquer aucune déformation de celui-ci. Une fois que la roue 7 du véhicule 1 a franchi l'élément de calage 4, les bras de suspension 119 reprennent leur position, sous l'action des moyens de torsion, si bien que le plan du plateau 111 est de nouveau disposé à faible distance d du sol. Lorsque le véhicule 1 est positionné correctement par rapport au quai 2, on déplace le plateau 111, supportant l'élément de calage 4, vers la roue 7 du véhicule 1 que l'on souhaite immobiliser, à savoir vers l'arrière dans ce mode de mise en oeuvre, c'est-à-dire vers la droite sur les figures 8 à 9b. Pour ce faire on actionne le moteur de façon à déplacer vers l'arrière (flèche F1) le brin supérieur de la courroie 12 sur lequel est fixée la patte transversale 133 solidaire du coulisseau 131. Le coulisseau 131, en raison des frottements existant entre lui-même et le plateau 111, entraîne ce dernier vers l'arrière, jusqu'à ce que l'élément de contact 123 se trouve appliqué contre la roue 7. Dès lors le plateau 111 ne peut plus reculer, et la courroie 12 entraîne, vers l'arrière, le coulisseau 131 sur le plateau 111, si bien que la partie postérieure inclinée 135 de celui-ci entre en contact avec le galet 137 et le déplace vers le haut. Ensuite la partie antérieure de la lumière 141 du coulisseau 131 entre en contact avec l'extrémité de l'axe antérieur 19 formant le téton 127 et entraîne cet axe 19 vers l'arrière, ce qui provoque la mise en position active de l'élément de calage 4, ainsi qu'expliqué précédemment (figure 9b).

Un tel mode de mise en oeuvre permet de réalise un élément de calage 4 particulièrement plat puisque les trois axes, antérieur 19, intermédiaire 18, et postérieur 21 peuvent être pratiquement alignés, lorsque l'élément de calage 4 est en position de repos. Cet alignement est rendu possible en raison de ce que l'axe intermédiaire 18 est déplacé vers le haut, par le coulisseau 131, avant que l'effort ne soit appliqué à l'axe antérieur 19.

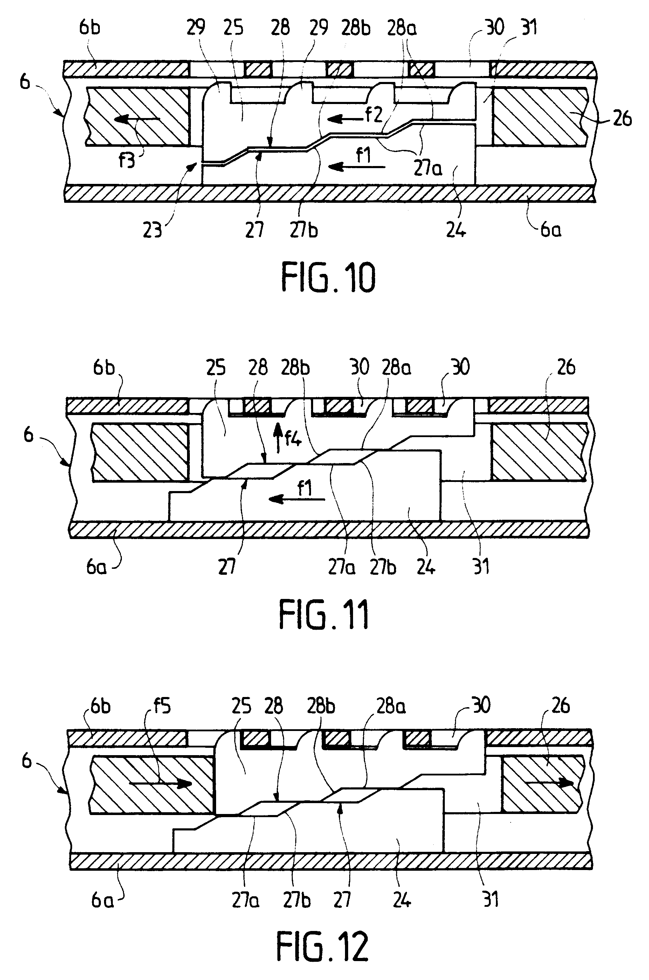

Le coulisseau 131 continue ainsi sa course vers l'arrière, entraîne par la courroie 12, jusqu'à ce qu'il rencontre des moyens de butée, non représentés sur le dessin, tels que par exemple la butée 22 de la figure 5. En fin de course l'aile transversale 129 provoque l'activation des moyens de fixation du plateau 111 sur les profilés 6, tels que par exemple, des moyens de crabotage qui seront décrits ci-après en regard des figures 10 à 12. La butée 22 est disposée de façon que le mouvement en arrière du coulisseau 131 soit stoppé après que l'axe antérieur 19 ait dépassé la verticale issue de l'axe intermédiaire 18, de façon à former un verrouillage à genouillère (figure 9b).

De façon intéressante la dimension longitudinale de l'élément de contact 123 et la forme du panneau postérieur 17 sont telles, qu'en position active de l'élément de calage 4, le panneau postérieur 17 ne se trouve pas en contact avec la roue.7 Cette disposition permet d'éviter, qu'au cours du chargement du véhicule 1, un enfoncement de celui-ci, dû à la charge embarquée, provoque le coincement de l'élément de calage 4 par la roue 7 dudit véhicule 1.

Une fois les opération de transbordement effectuées, on déplace vers l'avant le brin supérieur de la courroie 12, ce qui provoque un fonctionnement inverse du dispositif, de façon à libérer la roue 7 et remettre l'élément de calage 4 en position de repos, de sorte qu'il puisse être de nouveau franchi par le véhicule 1 lorsque celui-ci quitte le quai 2.

On a représenté sur les figures 10 à 12 un mode de mise en oeuvre de crabotage permettant de bloquer fermement l'élément de calage 4 dans sa position active, en le rendant alors solidaire des profiles 6. Ce dispositif de crabotage, désigné dans son ensemble par la référence 23, qui est situé en dehors de la zone de roulement, comprend, à l'intérieur de chaque profilé en U 6 formant le support 5, plusieurs éléments mobiles avec le plateau 111 ou avec chaque chariot 11, à savoir un coin 24, un sabot d'ancrage 25 et une barre de verrouillage 26. Le coin 24 dont le bord externe, rectiligne, est plaqué contre une aile interne 6a du profilé 6, présente un bord interne 27 de direction générale inclinée par rapport à la direction longitudinale et qui est en contact avec un bord incliné correspondant 28 du sabot d'ancrage 25. Les bords inclinés 27,28 sont étagés et ils présentent des tronçons longitudinaux respectifs 27a,28a, lesquels sont reliés par des tronçons inclinés respectifs 27b,28b, formant rampes. Le sabot d'ancrage 25 présente, sur son bord externe opposé à son bord interne étagé 28, une succession de dents 29, espacées les unes des autres dans le sens longitudinal, qui sont destinées à venir s'engager dans des trous 30 prévus dans l'aile en regard 6b du profilé en U 6, ces trous 30 formant une sorte de crémaillère. Le sabot d'ancrage 25 est logé, avec un certain jeu longitudinal, dans une lumière longitudinale 31 prévue dans la barre de verrouillage 26 qui est mobile longitudinalement.

Le fonctionnement du dispositif de crabotage 23 est le suivant: lorsque l'élément de calage avant 4 est déplacé vers l'arrière, c'est-à-dire vers la gauche sur les figures 10 à 12, les trois éléments accompagnant le plateau 111 ou chaque chariot 11, c'est-à-dire le coin 24, le sabot d'ancrage 25 et la barre de verrouillage 26, sont entraînés conjointement vers la gauche ainsi qu'il est indiqué respectivement par les flèches f1,f2,f3 sur la figure 10. Lorsque l'élément de calage avant 4 vient en contact avec une roue 7 et se déforme, par suite de son immobilisation, pour passer en position active ou de calage, la barre de verrouillage 26 est alors elle aussi immobilisée, et par conséquent il en est de même du sabot d'ancrage 25, tandis que le coin 24 poursuit seul son mouvement vers l'arrière, c'est-à-dire vers la gauche, ainsi qu'il est représenté par la seule flèche f1 sur la figure 11. De ce fait les tronçons inclinés formant rampes 27b,28b glissent les uns sur les autres et le coin 24 repousse latéralement le sabot d'ancrage 25 vers l'extérieur suivant la flèche f4, si bien que ses dents 29 s'engagent, avec un certain jeu longitudinal, dans des trous 30 du profilé en U 6. Après une course suffisante du coin 24 vers l'arrière, ce coin 24 est immobilisé, et la barre de verrouillage 26 est alors déplacée vers l'avant, c'est-à-dire vers la droite, ainsi qu'il est représenté par la flèche f5 sur la figure 12. Ceci a pour effet de repousser le sabot d'ancrage 25 vers l'avant, si bien que ses dents 29 viennent buter fermement contre les bords arrière les trous 30, en assurant ainsi le blocage fermé du plateau 111 ou de chaque chariot 11 sur chaque profilé en U 6 et de l'élément de calage avant 4, en position active, sur l'ensemble de son support 5.

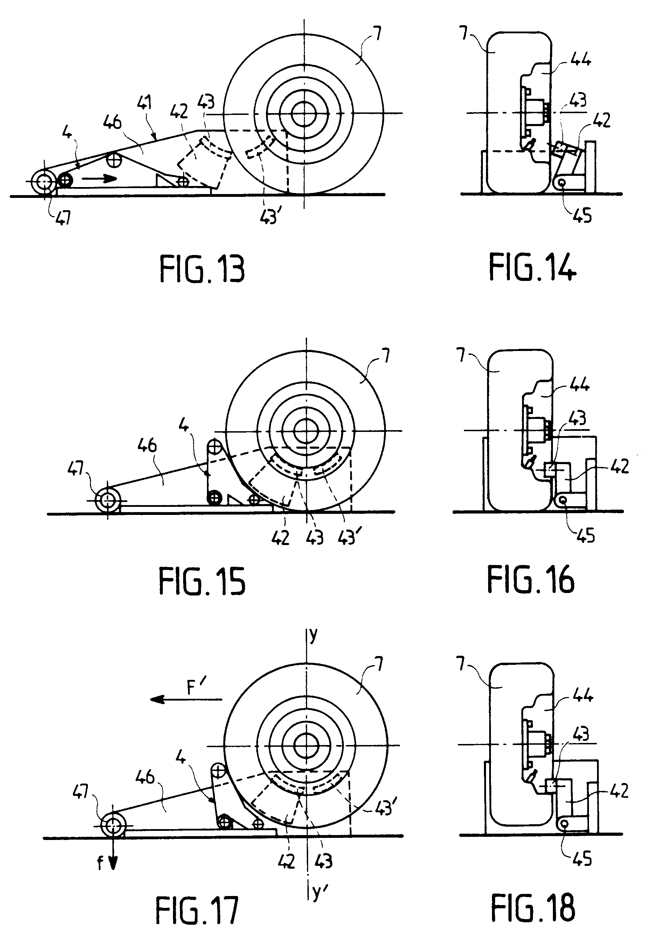

On décrira maintenant, en se référant aux figures 13 à 18, un dispositif 41 qui est associé à chaque élément de calage déformable 4 pour empêcher qu'une roue 7, en appui contre un tel élément de calage 4 qui se trouve en position active, ne puisse l'escalader sous l'effet d'un effort de traction vers l'avant appliqué au véhicule. Ce dispositif 41 comprend une bride 42, qui prend appui sur le socle de l'élément de calage et qui est montée mobile de manière qu'un patin 43, en saillie latéralement à sa partie supérieure, puisse s'engager dans l'espace délimité à l'intérieur de la jante 44 de la roue 7. La bride mobile 42 peut être, par exemple, articulée, à sa partie inférieure, sur le socle de l'élément de calage avant 4, autour d'un axe horizontal et longitudinal 45.

Lorsque l'élément de calage avant déformable 4 est en position de repos, ainsi que représenté sur les figures 13 et 14, la bride 42 et son patin 43 sont escamotés latéralement de manière à ne pas gêner le passage des roues 7 reculant. Dans cette position, la bride 42 est donc inclinée de bas en haut vers l'extérieur. Lorsqu'au cours de son mouvement de recul, l'élément de calage 4 arrive dans sa position intermédiaire, et forme un triangle rectangle, ainsi que représenté sur la figure 15, cette déformation de l'élément de calage 4 provoque, par des moyens de liaison appropriés non représentés, le pivotement de la bride 42 dans le sens inverse des aiguilles d'une montre, pour l'amener dans sa position verticale représentée sur la figure 16. Dans cette position le patin 43 de la bride 42 est engagé à l'intérieur de la jante 44 de la roue 7, en étant toutefois situé à une faible distance au-dessus du bord de cette jante. Par conséquent si, alors que l'élément de calage avant 4 se trouve en position active ainsi que représenté sur la figure 17, un effort de traction vers l'avant F' est appliqué au véhicule, la roue 7 tend à escalader l'élément de calage avant 4 mais elle en est empêchée du fait que le bord de sa jante 44 est alors retenu par le patin 43 de la bride 42, ainsi que représenté sur les figures 17 et 18. Bien entendu on améliorera l'efficacité du maintien, en utilisant une seconde bride possédant un patin 43' (représenté en pointillé sur les figures 13 à 18), symétrique du patin 43 par rapport à l'axe de symétrie vertical yy' de la roue 7 lorsque celle-ci est en contact avec l'élément de calage 4 (figure 17).

Pour augmenter la résistance à l'arrachement de la bride 42, on peut monter cette bride sur un sabot longitudinal 46 formant bras de levier et prenant appui, à son extrémité antérieure, sur le sol, par l'intermédiaire d'un galet ou rouleau 47. De ce fait lorsque la bride 42 est sollicitée vers le haut par la roue 7 tentant d'escalader l'élément de calage avant 4, comme représenté sur les figures 17 et 18, le sabot 46 agit en même temps en tant que bras de levier transformant l'effort de couple en un effort d'appui sur le sol, par son galet ou cylindre 47 prévu à son extrémité antérieure.

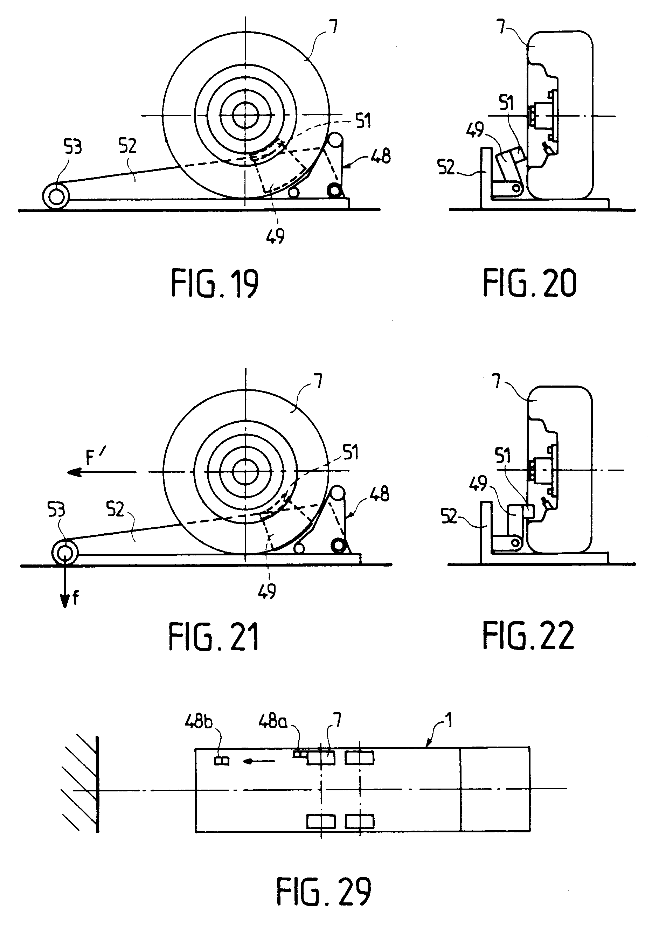

Les figures 19 à 22 illustrent une variante d'exécution, dans laquelle l'installation de sécurité suivant l'invention comprend également un élément de calage arrière 48, c'est-à-dire qui est située entre la roue 7 et le quai industriel 2. Cet élément de calage arrière 48 peut avoir une forme fixe ou bien encore il peut être déformable, ainsi que représenté, comme l'élément de calage avant 4. A cet élément de calage arrière 48 est associée une bride mobile 49, portant un patin 51 et semblable à la bride 42. Cette bride 49 peut être actionnée par tous moyens appropriés permettant de l'engager à l'intérieur de la jante 44 de la roue 7, lorsque cette roue est en contact avec l'élément de calage arrière 48, pour empêcher que cette roue 7 ne s'éloigne, vers l'avant, de l'élément de calage arrière 48, la bride mobile 49 peut être également montée mobile sur un sabot d'appui 52, formant bras de levier, s'étendant longitudinalement vers l'avant et prenant appui, à son extrémité antérieure, sur le sol, par un galet ou rouleau 53, Par conséquent, lorsque la roue 7 tend à s'écarter de l'élément de calage arrière 48, sous l'effet d'une traction vers l'avant F' appliquée au véhicule, le bord de sa jante vient en butée contre le patin 51 de la bride 49 et le sabot d'appui 52 formant bras de levier, transforme l'effort de couple en un effort f d'appui sur le sol.

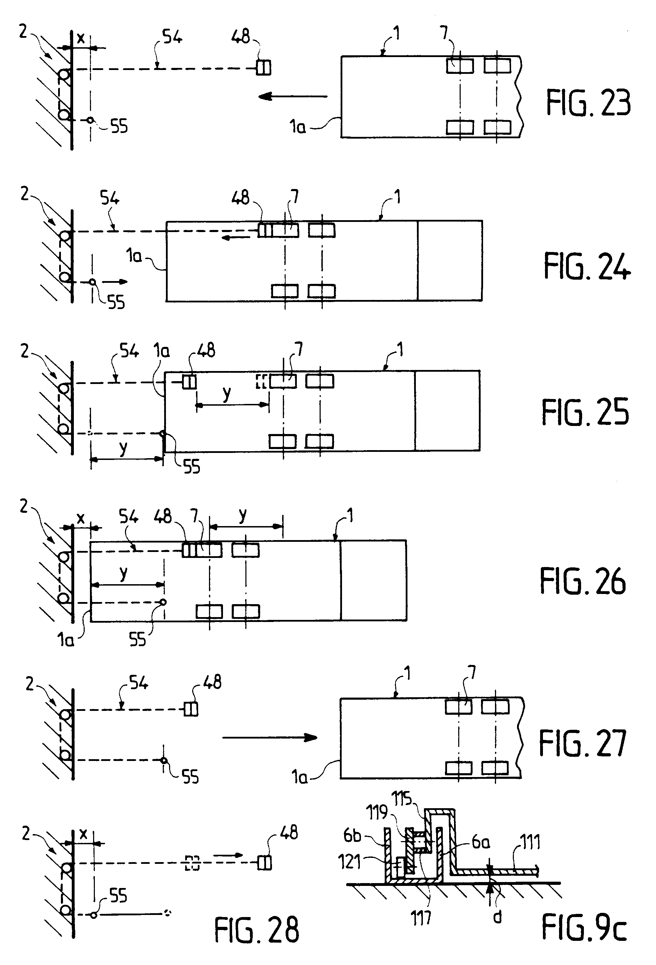

On décrira maintenant, en se référant aux figures 23 à 29 un dispositif auxiliaire, faisant partie de l'installation de sécurité suivant l'invention, permettant de limiter le recul du véhicule 1. Ce dispositif comprend un élément de calage arrière 48 qui est accouplé, par un mécanisme de transmission approprié 54, à un détecteur 55 de la position du bord arrière 1a du véhicule 1. Le mécanisme de transmission 54 est agencé de telle façon qu'un déplacement longitudinal vers l'avant ou vers l'arrière de l'élément de calage 48 provoque un déplacement de même amplitude mais de sens inverse, c'est-à-dire vers l'arrière ou vers l'avant, du détecteur 55. En position de départ, ainsi qu'il est représenté sur la figure 23, le détecteur 55 est placé à une distance x prédéterminée en avant du quai industriel 2 et à une hauteur correspondante à celle de l'arrière du véhicule 1, tandis que l'élément de calage arrière 48 est situé plus avant, sur le trajet suivi par les roues 7 du véhicule 1 reculant. La distance x est choisie de manière à correspondre à celle à laquelle devra se trouver le bord arrière 1a en position de transbordement de marchandises. Pour amener le véhicule 1 dans la position de transbordement prédéterminée, le conducteur fait reculer ce véhicule 1 jusqu'à ce que l'une des roues arrière 7 vienne en contact avec l'élément de calage arrière 48, ainsi que représenté sur la figure 24. Le conducteur du véhicule 1 descend alors de celui-ci et commande le déplacement longitudinal vers l'arrière de l'élément de calage arrière 48. Cet élément de calage peut être monté, à cet effet, sur un support approprié fixé au sol et il est entraîne par un système motorisé. Le recul de l'élément de calage arrière 48 se traduit par l'avancement concomitant du détecteur 55 jusqu'à ce que celui-ci vienne en contact avec le bord arrière la du véhicule 1, comme représenté sur la figure 25. Cette position correspond à un recul de l'élément de calage arrière 48 d'une distance y et à un avancement du détecteur 55 de cette même distance y. Le déplacement de l'élément de calage 48 et du détecteur 55 s'arrête aussitôt que ce détecteur vient en contact avec le bord arrière la du véhicule 1. Le conducteur du véhicule remonte alors dans celui-ci et fait de nouveau reculer son véhicule 1 jusqu'à ce que la roue arrière 7 vienne en contact avec l'élément de calage arrière 48, dans la nouvelle position qu'elle occupe et qui est plus proche du quai 2. Pendant ce mouvement de recul additionnel le détecteur 45 est alors escamoté et passe sous le véhicule 1. En fin de mouvement de recul le véhicule se trouve dans la position représentée sur la figure 26 et son arrière la se trouve alors situé exactement à la distance x du quai industriel 2, distance correspondant à la position initiale du détecteur 55, Après le transbordement des marchandises, le véhicule 1 repart vers l'avant, ainsi que représenté sur la figure 27 et ensuite l'élément de calage arrière 48 est avancé, tandis que le détecteur 55 recule, pour reprendre leurs positions de départ telles que représentées sur la figure 23. La détection du positionnement de l'élément de calage arrière 48 peut bien entendu être réalisée par des moyens mécaniques, mais l'on pourra également faire appel à des moyens de détection de type télémétrique, par exemple optiques ou électroniques.

Afin d'assurer un maintien efficace du véhicule lors de la phase dans laquelle l'élément de calage arrière 48 se met en position finale arrière, cette dernière peut être constituée de deux parties, ainsi que représenté sur la figure 29, à savoir une partie 48a qui reste au contact de la roue 7 la plus en arrière du véhicule 1, et une partie 48b qui, elle, se positionne comme exposé précédemment dans la position finale arrière.

Après le positionnement de cette dernière, la partie d'élément de calage arrière 48a est escamotée pour permettre au véhicule 1 de venir en contact avec la partie d'élément de calage arrière 48b.

Une fois l'opération de transbordement effectuée, des moyens assurent le déplacement vers l'avant de l'élément de calage avant 4, jusqu'à une seconde position, ou position de fin de transbordement, de façon à autoriser le déplacement du véhicule jusqu'à cette position, afin que l'utilisateur puisse refermer les portes de celui-ci.

Dans une variante de mise en oeuvre, l'élément de calage arrière 48 suit le mouvement vers l'avant du véhicule, de façon à venir en blocage sur la roue arrière de celui-ci de façon, conjointement à l'action de retenue de la butée avant 4, à assurer l'immobilisation totale du véhicule pendant l'opération de fermeture des portes. Les éléments de calage avant 4 et arrière 48 peuvent être munies de moyens de commande temporisée permettant, après un temps donné permettant au chauffeur de reprendre place à bord de son véhicule, d'assurer l'escamotage des éléments de calage puis leur remise en place en position initiale, c'est-à-dire en une position d'attente de l'arrivée d'un autre véhicule.

Bien entendu les éléments de calage mis en oeuvre suivant la présente invention peuvent être en mesure d'assurer aussi bien une fonction d'arrêt et de blocage total des véhicules, comme vu précédemment, ainsi qu'une fonction de détection du positionnement de celui-ci, susceptible d'être utilisée pour mettre en oeuvre un signal destiné à l'utilisateur.

Par ailleurs bien que certains modes de mise en oeuvre de l'invention aient été décrits dans le cas d'une utilisation d'éléments de calage avant, il est bien évident qu'il pourraient également être mis en oeuvre des éléments de calage arrière.

## Revendications

1. Installation destinée à assurer l'immobilisation d'un véhicule (1), dans une position de transbordement déterminée, notamment par rapport à un quai industriel (2), comportant au moins un élément de calage mobile (4) pour immobiliser au moins une roue (7) du véhicule, caractérisée en ce qu'elle comprend:
- au moins un support (5) en appui sur le sol et ancré dans celui-ci,
- au moins un élément de calage (4), mobile par rapport au support (5) dans un plan sensiblement horizontal, entre au moins deux positions, à savoir une première position, ou position de repos, et une seconde position, ou position active, dans laquelle l'élément de calage (4) assure le blocage de ladite roue (7),
- des moyens d'entraînement (12,15) pour assurer le déplacement dudit élément de calage (4) par rapport au support (5), entre sa position de repos et sa position active et vice versa et,
- des moyens de liaison (23),aptes à rendre ledit élément de calage (4) solidaire du support (5) lorsqu'il se trouve en position active.

2. Installation suivant la revendication 1 caractérisée en ce que le support (5) est disposé à proximité d'au moins une roue (7) du véhicule (1).

3. Installation suivant le revendication 2 caractérisée en ce qu'elle comporte une pluralité de supports, constitués chacun, d'un plot ancré dans le sol, ces plots étant disposés à distance donnée les uns des autres, suivant une ligne sensiblement perpendiculaire au quai de chargement.

4. Installation suivant la revendication 2 caractérisée en ce que le support (5) assure le guidage d'au moins un chariot (11,111) supportant un élément de calage (4), le chariot (11,111) étant mobile, sous l'action des moyens d'entraînement (12,15), entre la position de repos et la position active de l'élément de calage (4).

5. Installation suivant la revendication 4 caractérisée en ce que le support (5) est constitué de deux éléments (6) longitudinaux parallèles et distants l'un de l'autre suffisamment pour permettre aux roues (7) du véhicule (1) de passer entre eux, ces éléments longitudinaux (6) assurant le guidage d'au moins un chariot (11,111), l'élément de calage (4) s'étendant transversalement entre lesdits éléments longitudinaux, et chacune de ses extrémités prenant respectivement appui sur ledit chariot (11,111).

6. Installation suivant la revendication 5 caractérisée en ce que le chariot est formé d'un plateau (111) monté mobile dans les supports (6) et qui est maintenu à une faible distance du sol par des moyens de suspension élastiques, au moins lorsque l'élément de calage (4) se déplace de sa position de repos à sa position active.

7. Installation suivant l'une quelconque des revendications précédentes caractérisée en ce que l'élément de calage (4) est déformable et présente, en position de repos, une forme relativement aplatie permettant son franchissement aisé par les roues (7) du véhicule (1), et, en position active, une forme dressée vers le haut.

8. Installation suivant la revendication 7 caractérisée en ce que l'élément de calage (4) est réalisé sous la forme d'un dièdre déformable convergeant vers le haut, formé d'un panneau antérieur (16), ou panneau le plus éloigné de la roue (7) à bloquer, et d'un panneau postérieur (17), ou panneau le plus rapproché de ladite roue (7), constituant les deux côtés du dièdre, ces deux panneaux étant articulés entre eux autour d'un axe transversal intermédiaire (18), constituant l'arète supérieure du dièdre déformable, le panneau antérieur (16) étant articulé, le long de son bord antérieur et inférieur, sur un axe transversal antérieur (19), qui est entraîne par les moyens d'entraînement (12), le panneau postérieur (17) étant articulé, le long de son bord postérieur et inférieur, sur un axe transversal postérieur (21), cet axe postérieur (21) étant monté en position fixe sur ledit chariot (11,111) alors que l'axe antérieur (19) qui est entraîne, est monté de manière à pouvoir se déplacer longitudinalement sur ledit chariot (11,111), afin de commander la déformation de l'élément de calage (4).

9. Installation suivant la revendication 8 caractérisée en ce que des moyens de came (135), entraînés en translation par les moyens d'entraînement (12), sont disposés au voisinage de l'axe intermédiaire (18), lorsque l'élément de calage (4) est en position de repos, de façon à assurer son déplacement vertical, au moins avant que l'axe antérieur (19), ne soit sollicité en déplacement, lorsque l'élément de calage (4) passe de la position de repos à la position active.

10. Installation suivant la revendication 9 caractérisée en ce que les moyens de came sont constitués d'un coulisseau (131), lié aux moyens d'entraînement (12) comportant sur sa partie postérieure une partie (135) inclinée du haut vers le bas et d'avant en arrière, apte à entrer en contact avec l'axe intermédiaire (18) pour le soulever, le coulisseau (131) comportant une lumière (141) allongée dans le sens longitudinal, recevant une extrémité de l'axe antérieur (19), un jeu étant prévu entre l'extrémité antérieure de la lumière (141) et l'axe antérieur (19), lorsque l'élément de calage (4) est en position de repos de façon que, lorsque le coulisseau (131) se déplace vers la partie postérieure du chariot (11,111), sa partie inclinée (135) a assuré le soulèvement de l'axe intermédiaire (18) lorsque l'extrémité antérieure de la lumière (141) vient en contact avec l'axe antérieur (19).

11. Installation suivant l'une des revendications 8 à 10 caractérisée en ce qu'un élément de contact transversal (123) est prévu sur la partie postérieure du chariot (1,111), cet élément de contact (123) étant mis en appui contre la roue à caler (7) du véhicule (1), en position active, par les moyens d'actionnement (12), la dimension longitudinale de cet élément de contact (123) étant telle que, lorsqu'il est en appui contre la roue à caler (7), cette dernière n'est pas en contact avec le panneau postérieur (17).

12. Installation suivant l'une des revendications 8 à 11 caractérisée en ce que ledit chariot (11,111) porte une butée (22) limitant le mouvement de l'axe antérieur (19) vers la roue, dans une position telle que, lorsque l'élément de calage (4) est dressé en position active, le panneau antérieur (16) de l'élément de calage (4) est incliné de haut en bas et de la partie antérieure vers la partie postérieure, de façon à former un mécanisme à genouillère qui est bloqué en position active, à l'encontre de tout mouvement de celle-ci vers l'élément de calage (4).

13. Installation suivant l'une quelconque des revendications précédentes caractérisée en ce que des moyens de crabotage permettant de rendre l'élément de calage (4) solidaire de son support (5), lorsqu'il se trouve en position active, qui comprennent plusieurs éléments mobiles avec ledit chariot (11,111) à savoir un coin (24), un sabot d'ancrage (25) et une barre de verrouillage (26), le coin (24), dont un bord externe rectiligne est plaqué contre une aile (6a) du profilé (6) du support (5) présente un bord interne étagé (27) constitué de tronçons longitudinaux respectifs (27a) reliés par des tronçons inclinés (27b) formant rampes, le sabot d'ancrage (25) présente un bord incliné étagé (28) correspondant, constitué de tronçons longitudinaux (28a) reliés par des tronçons inclinés (28b) formant rampes, lequel est en contact avec le bord interne étagé (27) du coin (24), le sabot d'ancrage (25) présente, sur son bord externe opposé à son bord interne étagé (28), une succession de dents (29) espacées les unes des autres dans le sens longitudinal, destinées à venir s'engager dans des trous (30) prévus dans l'aile en regard (6b) du profilé (6), ce sabot d'ancrage (25) étant logé, avec un certain jeu longitudinal, dans une lumière longitudinale (31) prévue dans la barre de verrouillage (26) qui est mobile longitudinalement.

14. Installation suivant l'une quelconque des revendications précédentes caractérisée en ce que des moyens (60) sont prévus pour la détection de l'élément de calage (4) pour commander un dispositif de sécurité (3), tel que par exemple une barrière mobile (3a), de manière à autoriser l'ouverture de cette barrière uniquement lorsque l'élément de calage (4) se trouve dans sa position active.

15. Installation suivant l'une quelconque des revendications précédentes caractérisée en ce qu'elle comporte un dispositif (41) associé à chaque élément de calage (4) pour empêcher qu'une roue (7), en appui contre l'élément de calage (4) en position active, ne puisse l'escalader sous l'effet d'un effort appliqué au véhicule (1), ce dispositif (41) comprenant une bride (42), prenant appui sur un socle de l'élément de calage (4), qui est montée mobile de manière qu'un patin (43), en saillie latéralement à sa partie supérieure, puisse s'engager dans l'espace délimité à l'intérieur de la jante (44) de la roue (7) afin de retenir cette jante (44).

16. Installation suivant la revendication 15 caractérisée en ce que la bride (42) est montée sur un sabot longitudinal (46) formant bras de levier et prenant appui, à son extrémité antérieure, sur le sol, pour transformer l'effort de couple en un effort d'appui sur le sol à son extrémité antérieure.

17. Installation suivant l'une quelconque des revendications précédentes caractérisée en ce qu'elle comprend à la fois un élément de calage avant et un élément de calage arrière (48) auquel est associée une bride mobile (49) portant un patin (51) pouvant s'engager à l'intérieur de la jante (44) de la roue (7), pour empêcher que cette roue (7) ne s'éloigne, vers l'avant, de l'élément de calage arrière (48).

18. Installation suivant la revendication 17 caractérisée en ce que la bride mobile (49), associée à l'élément de calage arrière (48) est montée sur un sabot d'appui (52), formant bras de levier, s'étendant longitudinalement vers l'avant et prenant appui, à son extrémité antérieure, sur le sol.

19. Installation suivant l'une quelconque des revendications précédentes caractérisée en ce qu'elle comprend un dispositif auxiliaire permettant de limiter le recul du véhicule (1), ce dispositif comprenant un élément de calage arrière (48) qui est accouplé, par un mécanisme de transmission (54), à un détecteur (5) de la position du bord arrière (1a) du véhicule (1), ce mécanisme de transmission (54) étant agencé de telle façon qu'un déplacement longitudinal vers l'avant ou vers l'arrière de l'élément de calage (48) provoque un déplacement de même amplitude mais de sens inverse, c'est-à-dire vers l'arrière ou vers l'avant, du détecteur (55).

20. Installation suivant l'une quelconque des revendications précédentes caractérisée en ce qu'elle comprend des moyens auxiliaires permettant d'écarter l'élément de calage (4) de la roue, une fois que le transbordement du véhicule (1) est effectué, jusqu'à une troisième position ou position de fin de transbordement, de façon à autoriser le déplacement du véhicule jusqu'à cette position et son immobilisation à celle-ci.

21. Installation suivant l'une quelconque des revendications précédentes caractérisée en ce que l'élément de calage est un élément de calage arrière réalisé en deux parties (48a,48b), des moyens étant prévus pour assurer, lors de la mise en position de la partie arrière d'un véhicule (1) par rapport au quai industriel (2), un positionnement d'une partie de l'élément de calage arrière (48a) à une distance du quai (2) suffisante pour autoriser, par exemple, l'ouverture de portes arrières du véhicule (1), et pour assurer le positionnement de l'autre partie de l'élément de calage arrière (48b) à une distance du quai apte à permettre le transbordement du véhicule (1), et à escamoter la partie de l'élément de calage arrière (48a) pour autoriser le recul du véhicule (1) de façon que la roue (7) la plus en arrière de celui-ci vienne en contact avec la partie de l'élément de calage arrière (48b).

## Claims

1. Installation for ensuring the immobilization of a vehicle (1) in a determined transfer position, particularly with respect to an industrial loading platform (2), having at least one movable wedging element (4) for immobilizing at least one vehicle wheel (7), characterized in that it includes:
- at least one support (5) supported and anchored on the ground,
- at least one wedging element (4) which is displaceable in a substantially horizontal plane relative to the support (5) between at least two positions, namely a first or rest position and a second or active position in which the wedging element (4) ensures a locking of said wheel (7),
- drive means (12, 15) for ensuring the displacement of said wedging element (4) relative to the support (5) between its rest position and its active position and vice versa; and
- fastening means (23) suitable for securing said wedging element (4) so as to be rigid with the support (5) in the active position.

2. Installation according to claim 1, characterized in that the support (5) is arranged in proximity to at least one wheel (7) of the vehicle (1).

3. Installation according to claim 2, characterized in that it includes a plurality of supports, each of which comprises a stud anchored in the ground, these studs being arranged at a given distance from one another along a line substantially perpendicular to the loading platform.

4. Installation according to claim 2, characterized in that the support (5) serves to guide at least one carriage (11, 111) supporting a wedging element (4), the carriage (11, 111) being displaceable by the drive means (12, 15) between the rest position and active position of the wedging element (4).

5. Installation according to claim 4, characterized in that the support (5) comprises two parallel longitudinal members (6) at a distance from one another sufficient to allow the wheels (7) of the vehicle (1) to pass between then, these longitudinal members (6) serving to guide at least one carriage (11, 111), the wedging element (4) extending transversely between said longitudinal members, each of its ends being supported on this carriage (11, 111).

6. Installation according to claim 5, characterized in that the carriage is formed by a plate (111) which is movable in the supports (6) and is held at a slight distance from the ground by a resilient suspension at least when the wedging element (4) moves from its rest position to its active position.

7. Installation according to one of the preceding claims, characterized in that the wedging clement (4) is deformable and has a relatively flat shape in the rest position so that the wheels (7) of the vehicle (1) can pass over them easily and is adjusted upward in the active position.

8. Installation according to claim 7, characterized in that the wedging element (4) is realized in the shape of a deformable dihedral converging at the top and formed by a front panel (16), or panel remotest of the wheel (7) to be locked, and by a rear panel (17), or panel closest to said wheel (7), which panels (16, 17) form the two sides of the dihedral and are articulated around a transverse intermediate axle (18) forming the upper edge of the deformable dihedral, the front panel (16) being articulated along its front lower edge on a front transverse axle (19) which is driven by the drive means (12), the rear panel (17) being articulated along its rear lower edge on a rear transverse axle (21) which is fixed in position on said carriage (11, 111), while the driven front axle (19) is arranged so as to be longitudinally dlsplaceable on the carriage (11, 111) so as to control the deformation of the wedging element (4).

9. Installation according to claim 8, characterized in that a cam arrangement (135) driven in a translatory manner by drive means (12) is arranged in the vicinity of the intermediate axle (18) when the wedging element (4) is in the rest position in such a way that it is displaced vertically at least before the front axle (19) is displaced when the wedging element (4) passes from the rest position to the active position.

10. Installation according to claim 9, characterized in that the cam arrangement includes a slide (131) connected to drive means (12), the rear portion of the slide (131) having a portion (135) which is inclined from top to bottom and from front to back and is capable of contacting the intermediate axle (18) so as to lift it, the slide (131) having a longitudinally elongated slot (141) receiving one end of the front axle (19), play being provided between the front end of the slot (141) and the front axle (19) when the wedging element (4) is in the rest position in such a way that when the slide (131) is displaced toward the rear portion of the carriage (11, 111) its inclined portion (135) has ensured the lifting of the intermediate axle (18) when the front end of the slot (141) comes into contact with the front axle (19).

11. Installation according to one of claims 8 to 10, characterized in that a transverse contact member (123) is provided on the rear portion of the carriage (11, 111), this contact member (123) being driven against the wheel (7) of the vehicle (1) to be wedged in the active position by drive means (12) and having a longitudinal dimension such that the wheel (7) to be wedged does not contact the rear panel (17) when the contact member (123) is supported against the wheel (7) to be wedged.

12. Installation according to one of claims 8 to 11, characterized in that said carriage (11, 111) carries a stop (22) limiting the movement of the front axle (19) toward the wheel in a position such that when the wedging element (4) is adjusted in the active position the front panel (16) of the wedging element (4) is inclined from top to bottom and from front to back in such a way that it forms an articulated mechanism which is locked in the active position against any movement of the latter toward the wedging element (4).

13. Installation according to one of the preceding claims, characterized in that a claw coupling arrangement which secures the wedging element (4) so as to be integral with its support (5) in its active position includes a plurality of members which move with said carriage (11, 111), namely a wedge (24), an anchoring block (25) and a locking bar (26), the wedge (24) whose rectilinear outer end contacts a flange (6a) of the section (6) of the support (5) has a stepped inner edge (27) having longitudinal portions (27a) connected by sloping portions (27b), respectively, forming ramps, the anchoring block (25) has a corresponding stepped sloping edge (28) made up of longitudinal portions (28a) connected by sloping portions (28b) forming ramps and contacts the stepped inner edge (27) of the wedge (24), the anchoring block (25) has a series of teeth (29) on its outer edge opposite its stepped inner edge (28) which are spaced in the longitudinal direction and serve to engage in the holes (30) provided in the facing flange (6b) of the section (6), the anchoring block (25) being accommodated with a certain degree of longitudinal play in a longitudinal slot (31) provided in the locking bar (26) which is longitudinally displaceable.

14. Installation according to one of the preceding claims, characterized in that an arrangement (60) is provided for detecting the wedging element (4) so as to control a safety arrangement (3), e.g. a movable barrier (3a), so as to permit this barrier to be opened only when the wedging element (4) is in its active position.

15. Installation according to one of the preceding claims, characterized in that it includes an arrangement (41) which is associated with each wedging element (4) for preventing a wheel (7) supported against the wedging element (4) in the active position from climbing it due to a force applied to the vehicle (1), this arrangement (41) includes a collar (42) which is supported on a base of the wedging element (4) and is displaceably mounted in such a way that a skid (43) which projects out laterally at its upper part can engage in the space defined in the interior of the rim (44) of the wheel (7) so as to retain this rim (44).

16. Installation according to claim 15, characterized in that the collar (42) is mounted on a longitudinal block (46) which forms a lever arm and is supported at its front end on the ground so as to transform the couple force into a supporting force on the ground at its front end.

17. Installation according to one of the preceding claims, characterized in that it simultaneously includes a front wedging element and a rear wedging element (48) associated with a movable collar (49) carrying a skid (51) which can engage in the interior of the rim (44) of the wheel (7) to prevent this wheel (7) from moving forward away from the rear wedging element (48).

18. Installation according to claim 17, characterized in that the movable collar (49) associated with the rear wedging element (48) is arranged on a bearing block (52) forming a lever arm, extending longitudinally toward the front and being supported at its front end on the ground.

19. Installation according to one of the preceding claims, characterized in that it includes an auxiliary arrangement which makes it possible to limit the backing up of the vehicle (1) and has a rear wedging element (48) which is coupled by transmission means (54) to a sensor (55) detecting the position of the rear edge (1a) of the vehicle (1), the transmission means (54) being arranged in such a way that a longitudinal displacement of the wedging element (48) toward the front or toward the rear causes a displacement of the sensor (55) by the same distance but in the opposite direction, i.e. toward the rear or toward the front.

20. Installation according to one of the preceding claims, characterized in that it includes auxiliary means which enable the wedging element (4) to move away from the wheel to a third position, or end of transfer position, once the transfer operation of the vehicle (1) has been effected so as to allow the vehicle to be moved up to this position and immobilized in it.

21. Installation according to one of the preceding claims, characterized in that the wedging element is a rear wedging element realized in two parts (48a, 48b), means being provided to ensure a positioning of one part (48a) of the rear wedging element at a sufficient distance from the platform (2) to allow e.g. the rear doors of a vehicle (1) to be opened when the rear part of the vehicle (1) is positioned with respect to the industrial platform (2) and to ensure the positioning of the other part (48b) of the rear wedging element at a distance from the platform suitable for loading or unloading the vehicle (1) and to withdraw the part (48a) of the rear wedging element to permit the vehicle (1) to back up so that the rearmost wheel (7) contacts the part (48b) of the rear wedging element.

## Patentansprüche

1. Anlage die in einer bestimmte Umladelage den Stillstand des Fahrzeugs (1) sichert, insbesondere im Verhältnis zu einer industriellen Verladerampe (2) mit mindestens ein mobiles Keilelement um wenigstens ein Rad des Fahrzeugs unbeweglich zu machen und dadurch gekennzeichnet das wenigstens
- eine Auflage (5) auf dem Boden fest verankert ist
- ein Keilelement (4) im verhältnis zur Auflage (5) in einer merklichen Horizontalebene zwischen mindestens zwei Stellungen mobil ist, zu wissen : die erste Stellung auch Ruhestellung genannt und die zweite Stellung, Betriebstellung, in welcher das Keilelement die blockierung des Rades (7) sichert
- ein Antriebsmittel (12,15) um das Verschieben des genanten Keilelements in Zusammenhang mit der Auflage (5) zwischen seiner Ruhestellung und Betriebstellung oder umgekehrt zu sichern
- ein mittel (23) das genannte Keilelement (4), das sich in Betriebstellung befindet, in einem Stück, an die Auflage (5) zu binden.

2. Anlage nächst dem ersten Anspruch, dadurch gekennzeichnet daß die Auflage (5) sich in Nähe von wenigstens einem Rad (7) des Fahrzeugs befindet.

3. Anlage nächst dem zweiten Anspruch dadurch gekennzeichnet das sie eine mehrzahl von Auflage enthält, die jede mit einer Steckstell am Boden verankort ist, diese steckstellen sind auf eine bestimmte Entfernung einer von der andere, nach einer zu Verladerampe senkrechte Ligne angelegt.

4. Anlage nächst drittem Anspruch dadurch gekennzeichnet daß die Auflage (5) die führung von mindestens einem Schlitten (11,111), der ein Keilelement (4) trägt, übernimmt, und mit dem Antriebsmittel (12,15) der Schlitte (11,111), zwischen der Ruhestellung und Betriebstellung des Keilelements (4), mobil ist.

5. Anlage nächst viertem Anspruch dadurch gekennzeichnet daß die Auflage (5) aus zwei Elementen (6) besteht, die der länge nach parallel, und genug entfernt einer von der andere, sind so daß die Räder (7) des Fahrzeugs (1) dazwischen durch kommen, diese Längstelementen (6) übernehmen die Führung von mindestens einem Schlitten (11,111), das Keilement querlaufend zwischen den zwei Längstelement erstreckend und jedes ende Jeweils auf den genanten Schlitten stütze nimmt.

6. Anlage nächst fünftem Anspruch dadurch gekennzeichnet daß der Schlitte aus einer Platte besteht die mobil auf die Auflagen (6) montiert ist und durch eine Elastischefederung gering über dem Boden gehalten wird, mindestens dann wenn das Keilelement (4) sich von der Ruhestellung in die Betriebstellung bewegt.

7. Anlage nächst irgend einem den vorherigen Ansprüche dadurch gekennzeichnet daß das Keilelement (4) biegsam ist und in Ruhestellung eine relative flache Form annimmt, vodurch die Räder (7) des Fahrzeugs (1) gut darüber fahren können, und in Betriebstellung dann eine nach oben gestellte Form annimmt.

8. Anlage nächst dem siebten Anspruch dadurch gekennzeichnet daß das Keilelement (4) in einer nachgiebiger, noch oben Konvergierende winkelbindende Form (Dieder) realisiert wurde, die Form besteht aus einer vorderen Platte (16), oder Platte die sich am weitesten von dem zu blockierenden Rad (7) befindet, und eine rückwärtige Platte (17), oder Platte die sich am nächsten von dem zu blockierenden Rad (7) befindet, und die damit die zwei Seiten des Dieders bilden. Diese zwei Platten sind untereinander um eine zwischenliegende transversale Achse (18), die die obere Kannte des nachgiebigen Dieder bildet, gegliedert. Die vordere Platte (16) ist in der länge ihres vorderem und unterem Rand auf eine vordere transversale Achsee (19), die mit dem Antriebsmittel gezogen wird, artikuliert, die Rückwertige Platte ist in der länge ihres hinterem und unterem Rand, auf eine hintere transversale Achse (21) artikuliert, diese hintere Axe (21) ist in eine feste Stellung auf dem gennanten Schlitten (11,111) montiert, während die vordere Achsee (19), die mitgezogen wird, so montiert ist das sie sich der länge nach auf dem gennante Schlitten (11,111) bewegen kann um die Formveränderung des Keilelements (4) zu steuern.

9. Anlage nächst achtem Anspruch dadurch gekennzeichnet daß, wenn das Keilelement (4) in Ruhstellung ist, die Vorschubkurve (135), die mit dem Antriebsmittel (12) in einer Translationsbewegung mit gezogen wird, in Nähe der zwischenliegende Achse angebracht wird, so daß bevor die vordere Achse (19) sich bewegt, wenn das Keilelernent (4) von der Ruhestellung in Betriebstellung übergeht, die vertikale Beweglichkeit gewährleistet wird.

10. Anlage nächst neuntem Anspruch dadurch gekennzeichnet daß die Vorschubkurve (135) aus einem Führungsschlitten besteht (131) der mit dem Antriebsmittel verbunden ist und auf seiner rückwärtige Seite (135) aus einem von oben nach unten und von vorne nach hinten geneigtes Teil besteht, das geeignet ist mit der zwischenliegende Achse (18) in Berührung zu kommen und zu heben, der Führungschlitten ist mit einem Langschnitt gelegenes Schlitzloch (141), in das das eine Ende der Achse kommt, versehen, ein Spiel zwischen dem vordere Ende des Schlitzloch (141) und der vordere Achse (19) ist Vorgesehen, wenn das Keilelement (4) in ruhestellung ist so daß, wenn der Führungschlitten (131) sich in Richtung des hinteren Teils des Schlittens (11,111) bewegt, sein schräges Teil (135) der Hub der zwischenliegende Achse (18) sichert wenn das vordere Ende des Schlitzloch (141) in berührung mit der Vordere Achse (19) kommt.

11. Anlage nächst Ansprüche 8 bis 10 dadurch gekennzeichnet daß auf dem hinteren Teil des Schlittens (11,111) ein transversales Kontaktelement vorgesehen ist, dieses Kontaktelement wird gegen das zu blockierenden Rad (7) des Fahrzeugs (1) gestütz, in Betriebstellung durch das Antriebsmittel, ist die Länge dieses Kontaktelements so das wenn es sich auf das blockierende Rad (7) stütz, dieses nicht mit der hintere Platte (17) in Berührung kommt.

12. Anlage nächst einem von den 8 bis, 11 Ansprüche dadurch gekennzeichnet daß der besagte Schlitte (11,111) einen Anschlag trägt der die beweglichkeit der vorder Achse (19) in richtung des Rades, begrenzt, in solch einer Stellung das wenn das Keilelement (4) in Betriebstellung hochgestellt ist, die vordere Platte (16) des Keilelements (4) von oben nach unten und von vorne nach hinten geneigt ist, so das es ein Kniehebel Mechanismus bildet das in Betriebstellung entgegen jeder Bewegung, des Anschlags gegen das Keilelement blockiert ist.

13. Anlage nächst einem der vorherigen Ansprüche dadurch gekennzeichnet daß eine Klauenkupplung es ermöglicht das Keilelement (4) mit seiner Auflage (5) zu verbinden, wenn diese in Betriebstellung steht, die Klauenkupplung besteht aus mehrere, mit dem Schlitten (11,111) zusammen mobile Elementen, zu wissen ein Keil (24), ein Verankerungklotz (25), und eine Riegelstange (26), das Keil von dem ein äußerer gradlinieger Rand gegen ein Flügel (60) des Profils (6) des Trägers (5) gedrückt ist, ein interner stufiger Rand (27) aufweist der aus respektive längst Teilstücke (27a) besteht , die durch schräge Teilstücke (27b) verbunden sind um Rampen zu bilden, der Verankerungsklotz (25) weist ein entsprechender stufig schräger Rand (28) auf, der aus longitudinale Teilstücke (28a) besteht, die durch schräge Teilstücke (28b) verbunden sind, und eine Rampe bilden, der Rand ist in Kontakt mit dem interne stufigen Rand (2) des Keils (24), der Verankerungklotz weist auf seinem äußeren Rand der seinem internen stufigen Rand entgegengesetz ist, eine Folge von Zacke auf die in der länge nach eine von der andere abstehen, und dazu bestimmt sind sich in die Löcher einzufügen die in dem Profil gegenüberstenhenden Flügel vorgesehen sind, dieser Verankerungsklotz ist, mit einem bestimmten longitudinalem Spielraum, in das longitudinale Schlitzloch (31) das in der longitudinal mobile Riegelstange vorgesehen ist, eingesetzt.

14. Anlage nächst einem der vorherigen Ansprüche dadurch gekennzeichnet daß Mitteln (60) vorgesehen sind um das Keilelment (4) zu erfassen, um eine sicherheits Vorrichtung zu betätigen, wie zum Beispiel ein mobiles Geländer (30) so das die Öffnung des Geländers nur freigegeben wird wenn das Keilelement (4) sich in Betriebstellung befindet.

15. Anlage nächst einem der vorherigen Ansprüche dadurch gekennzeichnet daß sie eine Vorrichtung (41), die mit jedem Keilelement (4) verbunden ist, beinhaltet, um zu verhindern daß ein Rad (7) das gegen das Keilelement in Betriebstellung drückt, nicht, unter der Kraftaufwand des Fahrzeugs (1), darüber fährt, diese Vorrichtung (41) bestehend aus einem Flansch (42) dar sich auf einem Untersatz des Keilelements (4) stützt, der mobil montiert ist so das ein, an seinem oberen Teil seitlich Vorspringende Kufe (43), in den begrenzten Raum der Radfelge (7,44) eindringen kann um diese zurückzuhalten.

16. Anlage nächst dem 15 Anspruch dadurch gekennzeichnet daß der Flansch (42) auf ein Längstklotz (46) montiert ist, ein Hebelarm bildend und sich auf seinem vorderen Ende auf den Boden stützt, um an dem vorderen Ende das Kräftepaar in eine auf dem Boden stützende Kraft zu ändern,

17. Anlage nächst einem der vorhergehenden Ansprüche dadurch gekennzeichnet daß sie sowohl ein vorderes Keilelement und ein hinteres Keilelement (48) beinhaltet das mit einem mobilen Flansch (49), der eine Kufe (51) trägt, verbindet um zu verhindern das dieses Rad in vorderer Richtung des hintere Keilelements (48) wegrückt.

18. Anlage nächst dem 17 Anspruch dadurch gekennzeichnet daß der mobile Flansch (49) in verbindung mit dem hinteren Keilelement (48) auf einem Stutzklotz (52) montiert ist, ein Hebelarm bildend, der sich der Länge nach, nach vorne erstreckt und sich mit seinem vorderem Ende auf den Boden stützt.

19. Anlage nächst eine der vorherigen Ansprüche dadurch gekennzeichnet daß sie mit einer Nebeneirichtung versehen ist die das rückfahren des Fahrzeugs (1) beschränkt, diese Einrichtung enthält ein hinteres Keilelement (48), das durch eine Kraftübertragung (54) an ein Detektor (5) des hinteren Randes (1a) des Fahrzeugs verkoppelt ist, die Kraftübertragung (54) ist so ausgestattet daß eine longitudinale Bewegung des Keilelements, nach vorne oder nach hinten eine bewegung des Detektors (55) von selber stärke aber in gegengesetzter Richtung, das heißt nach hinten oder nach vorne, bewirkt.

20. Anlage nächst einem der vorherigen Ansprüche dadurch gekennzeichnet daß sie nebenmitteln beinhaltet die es ermöglichen das Keilelement(4) vom Rad zu entfernen wenn das Umladen des Fahrzeugs (1) erfolgt ist, bis zu einer dritte Stellung oder Endstellung des Umladens genannt, um das bewegen des Fahrzeugs bis zu dieser Stelle und, an dieser Stelle sein Stillstand zu genehmigen.

21. Anlage nächst irgend einem der vorherigen Ansprüche dadurch gekennzeichnet daß das Keilelement ein, in zwei Teile (48a,48b) hergestelltes, hinteres Keilelement ist, Mitteln sind vorgesehen um während das in Position setzen des hinteren Teils des Fahrzeugs gegenüber der industriellen Verladerampe, eine Positionierung des hinteren Keilelementes zu einer genügender Distanz zu Verladerampe zu ermöglichen, um zum beispiel die Öffnung der hinteren Türen des Fahrzeugs (1) zu genehmigen und die Positionierung des anderen Teils des hinteren Keilelementes (48b) zu einer Distanz zur Verladerampe die genügend ist um das Umladen des Fahrzeuges zu ermöglichen, und um das hintere Teil des Keilelements (48a) einzusiehen um das rückfahren des Fahrzeugs (1) zu genehmigen so daß das Rad (7) daß sich am weitestem hinten befindet in Kontakt mit dem hinteren Teil des Keilelements (48b) kommt.
